# EUROPÄISCHE PATENTSCHRIFT

(11) **EP 3 141 710 B1**
(45) Veröffentlichungstag und Bekanntmachung des Hinweises auf die Patenterteilung: **14.02.2024**
(21) Anmeldenummer: 16185062.3
(22) Anmeldetag: 16.12.2013
(51) Int. Cl.: F01K 25/10, F01D 15/10, F01D 17/00, F25B 11/02, H02K 7/18

(54) **VORRICHTUNG UND VERFAHREN ZUM BETRIEB VON VOLUMETRISCHEN EXPANSIONSMASCHINEN**
DEVICE AND METHOD FOR OPERATING VOLUMETRIC EXPANSION MACHINES
DISPOSITIF ET PROCÉDÉ DE FONCTIONNEMENT DE MACHINES D'EXPANSION VOLUMÉTRIQUES

(43) Veröffentlichungstag der Anmeldung: 15.03.2017
(62) Teilanmeldung aus: 13197480.0
(73) Patentinhaber: BITZER Kühlmaschinenbau GmbH, 71065 Sindelfingen (DE); Orcan Energy AG, 81379 München (DE)
(72) Erfinder: Schuster, Andreas, 86874 Tussenhausen (DE); Langer, Roy, 81671 München (DE); Grill, Andreas, 81667 München (DE); Aumann, Richard, 80796 München (DE); Blumhardt, Marcus, 71277 Rutesheim (DE); Lörch, Roni, 75305 Neuenbürg (DE)
(74) Vertreter: Hoeger, Stellrecht & Partner Patentanwälte mbB

(56) Entgegenhaltungen:
- EP-A2- 0 952 316
- WO-A1-2011/149916
- WO-A2-02/090747
- DE-A1-102011 054 793
- DE-U1-202012 006 055
- US-A1- 2013 098 037

## Beschreibung

### Gebiet der Erfindung

Die Erfindung betrifft eine Vorrichtung mit einer Expansionsmaschine zum Erzeugen von mechanischer Energie durch Expandieren von Dampf eines Arbeitsmediums; und einem mit einer Welle der Expansionsmaschine verbundenen Generator zum Erzeugen von elektrischer Energie aus mechanischer Energie der Expansionsmaschine; wobei die Expansionsmaschine und der Generator eine bauliche Einheit mit einem Abdampfraum zwischen der Expansionsmaschine und dem Generator bilden. Weiterhin betrifft die Erfindung ein ORC-System und ein Verfahren zum Betreiben einer Expansionsmaschine.

### Stand der Technik

Ein ORC System, also ein System zur Gewinnung von elektrischer Energie aus Wärmeenergie mit dem Organic Rankine Cycle als thermodynamischen Kreisprozess, besteht aus den folgenden Hauptkomponenten: Eine Speisepumpe, die das flüssige Arbeitsmedium unter Druckerhöhung zu einem Verdampfer fördert, dem Verdampfer selbst, in dem das Arbeitsmedium unter Zuführung von Wärme verdampft und optional zusätzlich überhitzt wird, eine Expansionsmaschine, in welcher der unter hohem Druck stehende Dampf entspannt wird und dabei mechanische Energie erzeugt, welche über einen Generator zu elektrischer Energie gewandelt wird, und einem Kondensator, in dem der Niederdruckdampf aus der Expansionsmaschine verflüssigt wird. Aus dem Kondensator gelangt das flüssige Arbeitsmedium über einen optionalen Vorratsbehälter (Speisebehälter) und eine Saugleitung wieder zur Speisepumpe des Systems.

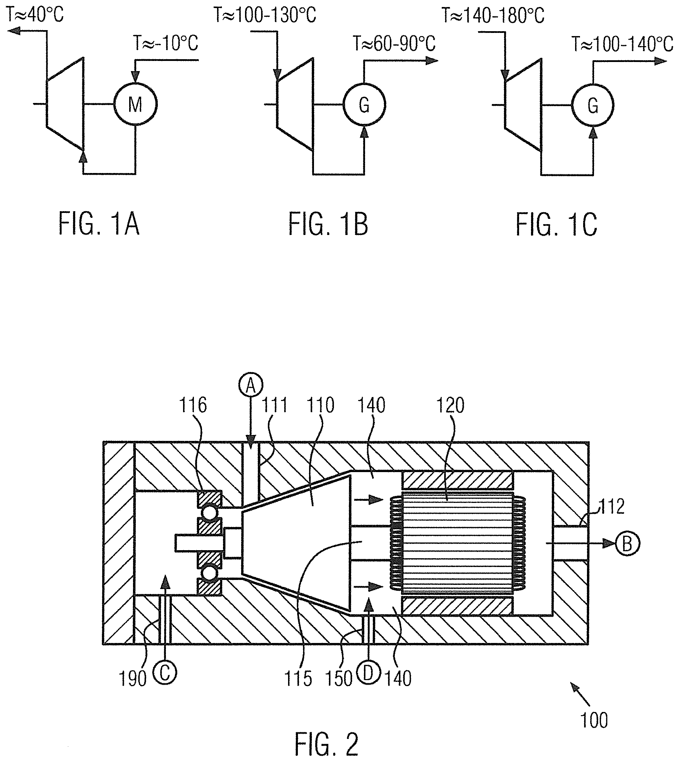

Es ist aus verschiedenen Gründen vorteilhaft, modifizierte Standardkompressionsmaschinen aus der Klima- und Kältetechnik in ORC-Systemen als Expansionsmaschinen anzuwenden, wobei dann der Motor M der Kompressionsmaschine als Generator G fungiert (Figur 1). Um eine mögliche Leckage des verwendeten Kältemittels an die Umwelt zu verhindern, ist es zweckmäßig, für diese Anwendung halbhermetische oder hermetische Expansionsmaschinen einzusetzen. Dabei ist der Generator G fest in das Gehäuse integriert, wodurch die leckageanfällige und wartungsintensive Wellendurchführung durch das Gehäuse der Expansionsmaschine entfällt.

In der Verwendung als Kompressor in der Klima- und Kältetechnik dient der Motor M zum Antreiben des Kompressors und der Motor wird durch den über den Motor strömenden kalten Dampf gekühlt (Figur 1A). In der Verwendung als Expansionsmaschine in einem ORC-System ist der Generator G demnach der Temperatur des expandierten Dampfes des Arbeitsmediums ausgesetzt, was bei Abdampftemperaturen unter 100°C unproblematisch für den Generator G ist (Figur 1B).

Zur Steigerung der Effizienz (höherer thermischer Wirkungsgrad) und zur Erweiterung des Einsatzgebietes ist es jedoch zweckmäßig, diese Dampftemperaturen zu erhöhen. Problematisch ist es in Bezug auf einen störungsfreien Betrieb, wenn dem Generator G eine Abdampftemperatur von über 100°C aufgeprägt wird. Dann kann die Grenztemperatur für die Generatorwicklung erreicht oder überschritten werden (beispielsweise 120°C in Figur 1C). Ein Betrieb des Generators und somit der Expansionsmaschine ist dann nicht mehr möglich, beziehungsweise führt zu einer vorschnellen Alterung oder einem Versagen der Isolierung der Generatorwicklung. Ausschlaggebend sind für den Generator also insbesondere die Wicklungstemperaturen. Dabei kann dem Generator die Temperatur beispielsweise durch Wärmeleitung im Gehäuse aufgeprägt werden.

Aktuell eingesetzte und verfügbare Expansionsmaschinen sind in ihrer Betriebstemperatur nach oben hin begrenzt. Zum einen wirken sich - wie soeben beschrieben - hohe Temperaturen in der Expansionsmaschine negativ auf den örtlich nahen Generator aus. Für diesen gibt es Grenztemperaturen, die nicht überschritten werden dürfen. Problematisch ist zum anderen die Viskosität der Lagerschmiermittel, die mit höheren Temperaturen abnimmt wodurch sich die Lagerschmierung verschlechtert.

Um die Abwärme aus einem ORC-Prozess für Heizzwecke, oder als Prozesswärme weiterhin nutzen zu können, muss die Wärme auf einem dafür geeigneten Temperaturniveau abgegeben werden (60-100°C). Dies führt aber bei niedrigen Frischdampftemperaturen zu schlechten Wirkungsgraden des Gesamtsystems. Es ist also vorteilhaft, diesem Effekt mit höheren Expansionsmaschineneintrittstemperaturen entgegenzuwirken. Höhere Temperaturen führen jedoch dazu, dass die Temperaturgrenzen für den Einsatz der Expansionsmaschine (durch Temperaturgrenzen für den Generator) überschritten werden, was nachteilig ist.

Dokument US2013098037 offenbart eine Vorrichtung mit den technischen Merkmalen des Oberbegriffs des unabhängigen Anspruchs 1.

### Beschreibung der Erfindung

Aufgabe der Erfindung ist es, die oben beschriebenen Nachteile zumindest teilweise zu überwinden.

Diese Aufgabe wird gelöst durch eine Vorrichtung nach Anspruch 1.

Die erfindungsgemäße Vorrichtung umfasst die technischen Merkmale des unabhängigen Vorrichtungsanspruchs 1.

Das entspannte Arbeitsmedium (Abdampf) wird nach der Expansionsmaschine durch flüssiges Arbeitsmedium, gekühlt. Durch die Zuführung, insbesondere Eindüsung in den Abdampfraum, expandiert, insbesondere verdampft, das zugeführte flüssige, Arbeitsmedium bei Kontakt mit dem heißen Abdampf und senkt somit die Temperatur im entspannten Medium. Der Einsatzbereich der volumetrischen Expansionsmaschine wird erweitert, wodurch diese für höhere Dampfeintrittstemperaturen (z.B. größer als 130°C) angewendet werden kann. Der Generator an der Expansionsmaschine wird ausreichend gekühlt und vor Überhitzung geschützt. Gleichzeitig steigt dessen Wirkungsgrad. Vorteilhaft ist hier ein Temperaturgefälle zwischen Generator und Abdampf von 20 K oder mehr, weil dann eine gute Kühlung des Generators gewährleistet ist.

Die erfindungsgemäße Vorrichtung kann dahingehend weitergebildet werden, dass das oder die Mittel zum Zuführen von Arbeitsmedium in den Abdampfraum eine oder mehrere Bohrungen in einem Gehäuse der baulichen Einheit umfassen. Dadurch wird eine Möglichkeit bereitgestellt, Arbeitsmedium in den Abdampfraum zuzuführen.

In einer anderen Weiterbildung kann die Welle als Hohlwelle ausgebildet sein und das Mittel zum Zuführen von Arbeitsmedium in den Abdampfraum kann eine oder mehrere Bohrungen in der Hohlwelle umfassen. Dadurch kann das zum Kühlen des Abdampfes zugeführte Arbeitsmedium zentral in den Abdampfraum eingebracht werden.

Das Mittel zum Zuführen von Arbeitsmedium in den Abdampfraum kann gemäß einer anderen Weiterbildung eine oder mehrere Düsen umfassen, die insbesondere an einer oder mehreren der Bohrungen angeordnet sein kann/können, wobei die Düse oder die Düsen insbesondere regelbar ausgebildet sein können. Durch die Düsen wird eine feine Verteilung des zugeführten Arbeitsmediums in den Abdampfraum erzielt werden. Das Einspritzen oder Einsprühen erzeugt Tröpfchen, die im Abdampfraum teilweise oder vollständig verdampfen und durch die dabei aufgenommene Verdampfungswärme dem Abdampf Energie entziehen.

Gemäß einer anderen Weiterbildung kann die erfindungsgemäße Vorrichtung oder eine der Weiterbildungen weiterhin eine Turbulenzeinrichtung zum Erzeugen einer turbulenten Strömung im Abdampfraum umfassen. Dadurch wird eine gute Verteilung des zum Kühlen zugeführten Arbeitsmediums erzielt, was eine räumlich gleichmäßigere Kühlung des Abdampfes bewirkt. Durch eine feinere Verteilung des Arbeitsmediums in kleinere Tröpfchen kommt es zudem zu einem schnelleren und vollständigeren Verdampfen des flüssigen Arbeitsmediums im Abdampfraum und daraus resultierend auch zu einer besseren Kühlung des Abdampfs.

Eine andere Weiterbildung besteht darin, dass das Mittel zum Zuführen von Arbeitsmedium in den Abdampfraum eine Zuführleitung für flüssiges Arbeitsmedium in den Abdampfraum umfassen kann.

Dieses kann dahingehend weitergebildet werden, dass das Mittel zum Zuführen von Arbeitsmedium in den Abdampfraum weiterhin eine Blende oder ein Ventil, insbesondere ein gesteuertes oder geregeltes Ventil, zum Einstellen eines Massenstroms des zugeführten Arbeitsmediums in der Zuführleitung aufweist.

In einer anderen Weiterbildung kann ein Temperatursensor zum Messen der Dampftemperatur im Abdampfraum oder im Generator zum Messen der Wicklungstemperatur vorgesehen sein, insbesondere ein PTC-Temperatursensor; und es kann optional weiterhin eine Steuer- oder Regeleinrichtung zum Steuern oder Regeln des Ventils oder der Blende in Abhängigkeit von der gemessenen Temperatur bereitgestellt sein, insbesondere zum Ein- und Ausschalten des Massenstroms in der Zuführleitung.

Die oben genannte Aufgabe wird weiterhin gelöst durch ein Verfahren zum Betreiben einer Expansionsmaschine nach Anspruch 12.

Das erfindungsgemäße Verfahren umfasst die technischen Merkmale des unabhängigen Verfahrensanspruchs 9.

Das erfindungsgemäße Verfahren hat die Vorteile, die bereits im Zusammenhang mit der erfindungsgemäßen Vorrichtung beschrieben worden sind.

Das erfindungsgemäße Verfahren kann dahingehend weitergebildet werden, dass der weitere Schritt des Einstellens eines Massenstroms des zugeführten Arbeitsmediums in einer Zuführleitung für flüssiges Arbeitsmedium in den Abdampfraum durchgeführt werden kann.

Gemäß einer anderen Weiterbildung können die folgenden weiteren Schritte vorgesehen sein: Messen der Dampftemperatur im Abdampfraum; oder Messen einer Wicklungstemperatur des Generators; und Einstellen des Massenstroms des zugeführten Arbeitsmediums mittels Steuern oder Regeln eines Ventils oder einer Blende in der Zuführleitung in Abhängigkeit von der gemessenen Temperatur, insbesondere Ein- und Ausschalten des Massenstroms in der Zuführleitung.

In einer anderen Weiterbildung können die folgenden weiteren Schritte vorgesehen sein: Zuführen eines Schmiermediums an eine oder mehrere Schmierstellen der Expansionsmaschine; und Kühlen des Schmiermediums mit dem zum Abdampfraum geführten Arbeitsmedium.

Die genannten Weiterbildungen können einzeln eingesetzt oder geeignet miteinander kombiniert werden.

Weitere Merkmale und beispielhafte Ausführungsformen sowie Vorteile der vorliegenden Erfindung werden nachfolgend anhand der Zeichnungen näher erläutert.

### Zeichnungen

- Figur 1: zeigt Stand der Technik
- Figur 1A: zeigt einen Kompressor (Stand der Technik bei Klimaanlagen)
- Figur 1B: zeigt einen Expander (Stand der Technik in ORC-Anlagen)
- Figur 1C: zeigt einen Expander (Entwicklungsziel ORC-Anlagen)
- Figur 2: zeigt eine Ausführungsform der erfindungsgemäßen Vorrichtung
- Figur 3: zeigt eine erste Ausführungsform einer erfindungsgemäßen ORC-Vorrichtung
- Figur 4: zeigt eine zweite Ausführungsform einer erfindungsgemäßen ORC-Vorrichtung
- Figur 5: zeigt eine dritte Ausführungsform einer erfindungsgemäßen ORC-Vorrichtung

### Ausführungsformen

Erfindungsgemäß wird entspanntes Arbeitsmedium (Abdampf) nach der Expansionsmaschine durch flüssiges Arbeitsmedium gekühlt. Durch die Eindüsung in den Dampfraum verdampft das flüssige Arbeitsmedium und senkt somit die Temperatur im entspannten Arbeitsmedium. In einer Weiterbildung wird das Lagerschmiermittel vor der Zugabe auf das Lager mittels des flüssigen Arbeitsmediums gekühlt. In einer weiteren Weiterbildung wird das für die Kühlung verwendete Arbeitsmedium an geeigneter Stufe einer mehrstufigen Kreiselpumpe aus dem Kreislauf abgezweigt.

Der Einsatzbereich der volumetrischen Expansionsmaschine wird erweitert, wodurch diese für höhere Dampfeintrittstemperaturen (z. B. deutlich größer als 130°C) angewendet werden kann. Der Generator an der Expansionsmaschine oder auch Turbine wird ausreichend gekühlt und vor Überhitzung geschützt. Gleichzeitig steigt dessen Wirkungsgrad. Die Lagerschmierung wird durch die zusätzliche Kühlung des Schmiermediums verbessert. Zur Umsetzung werden nur wenige neue Komponenten benötigt. Dazu gehören eine Verbindungsleitung für das flüssige Medium und eventuell zusätzlich ein Ventil, eine oder mehrere Düsen und ein Wärmeübertrager für das Schmiermittel. Durch die Anzapfung der Speisepumpe wird der zusätzliche Energieaufwand gering gehalten.

Die Vorteile der Erfindung bestehen darin, dass der Betrieb von Standardexpansionsmaschinen erweitert werden kann; der Generator vor Überhitzung geschützt wird; der Wirkungsgrad des Generators verbessert wird; die Lagerschmierung verbessert werden kann; höhere Temperaturniveaus genutzt und Nutzwärme aus dem System abgeben werden kann; keine oder nur wenige neue Komponenten erforderlich sind; und kaum zusätzlicher Energieaufwand nötig ist.

Bei halbhermetischen und hermetischen Schraubenexpansionsmaschinen wird der Generator von entspanntem Dampf überströmt und dadurch gekühlt. Bei hohen Dampftemperaturen (>120°C) ist eine Generatorkühlung nicht mehr gewährleistet. Es ist naheliegend diesem Effekt durch eine Kühlung des strömenden Dampfes entgegenzuwirken. Dazu wird in den Dampf, bevor dieser auf den Generator trifft, flüssiges Arbeitsmedium eingespritzt und über dessen Verdampfungsenthalpie eine Starke Auskühlung hervorgerufen, wobei in geringerem Maße auch sensible Wärme aufgenommen wird. Eine Kühlung mit Nutzung der Verdampfungsenthalpie ist effektiver als eine Kühlung ohne Phasenübergang bei ausschließlicher Nutzung von der Wärmekapazität. Für das Arbeitsmedium R245fa, welches aktueller Stand der Technik in ORC-Anlagen ist, sowie bei anderen für höhere Temperaturen geeigneten Medien, sind die Verdampfungsenthalpien um etwa einen Faktor 100 größer als die spezifischen Wärmekapazitäten.

Für eine Anwendung in ORC-Systemen kann für die Dampfkühlung flüssiges Arbeitsmedium nach der Speisepumpe abgezweigt und in den Dampfraum eingespritzt werden. Die Einspritzung in den Dampfraum kann über eine oder mehrere geeignete Bohrungen erfolgen. Zur besseren Verteilung des flüssigen Mediums und zur schnelleren Verdampfung aufgrund einer feinen Verteilung in kleinen Tropfen ist jedoch der Einsatz einer oder mehrerer Düsen zu empfehlen. Des Weiteren kann das flüssige Kühlmedium über eine Hohlwelle mit Bohrungen in den Dampfraum eingebracht werden. Hierzu bietet sich die Welle zwischen Expansionsmaschine und Generator an. Um die Verteilung zu optimieren, kann in den Dampfraum eine Turbulenzeinrichtung eingebracht werden. Der für die Kühlung notwendige Massenstrom bleibt bei Dampfkühlung bis 10K unter 10% des Dampfmassenstromes. Dieser Massenstrom kann über eine Querschnittsverengung in der Kühlleitung (z.B. über eine Blende oder ein Ventil) eingestellt werden. Bei der Verwendung einer Düse zur Einspritzung kann der Massenstrom über eine geeignete Düse eingestellt werden.

Die erfindungsgemäße Verschaltung des ORC-Systems erlaubt höhere Frischdampf- und Abdampftemperaturen bei Einsatz von Standardkomponenten. Durch die Anhebung der Temperaturniveaus ist es möglich, das System in Kraft-Wärme-Kopplung (KWK) zu betreiben. Damit kann die zur Kühlung des Systems verwendete Wärme als Heiz- oder Prozesswärme auf einem Temperaturniveau von ca. 80-100° C und darüber verwendet werden.

Figur 2 zeigt eine Ausführungsform einer erfindungsgemäßen Vorrichtung. Dabei handelt es sich um eine vereinfachte schematische Darstellung (beispielsweise ist nur ein Lager für die Welle dargestellt). Die erfindungsgemäße Vorrichtung umfasst eine Expansionsmaschine 110 zum Erzeugen von mechanischer Energie durch Expandieren von Dampf eines Arbeitsmediums; einen mit einer Welle 115 der Expansionsmaschine verbundenen Generator 120 zum Erzeugen von elektrischer Energie aus mechanischer Energie der Expansionsmaschine; wobei die Expansionsmaschine 110 und der Generator 120 eine bauliche Einheit 100 mit einem Abdampfraum 140 zwischen der Expansionsmaschine 110 und dem Generator 120 bilden, und wobei im Betrieb der Expansionsmaschine in den Abdampfraum 140 expandiertes Arbeitsmedium den Generator kontaktiert (indem es beispielsweise durch Zwischenräume zwischen Stator und Läufer des Generators strömt und/oder in Nuten im Gehäuse der baulichen Einheit 100 im Bereich des Generators strömt); und Mittel 150 zum Zuführen, insbesondere zum Einspritzen, von flüssigem Arbeitsmedium in den Abdampfraum 140, wobei das Mittel 150 in dieser Ausführungsform eine Öffnung 150 zum Abdampfraum 140 in der baulichen Einheit 100 umfasst. Das Arbeitsmedium A tritt an einem hochdruckseitigen Einlass 111 der baulichen Einheit 100 ein und verlässt die bauliche Einheit 100 an einem Auslass 112 als Abdampf B bzw. als gekühlter Abdampf B. Die Welle 115 ist an einem Lager 116 gelagert und es ist ein Eintritt 190 für ein Lagerschmiermittel C vorgesehen. Das in die Öffnung 150 eingespritzte flüssige Arbeitsmedium verdampft zumindest teilweise und entzieht dem Abdampf dadurch Wärmeenergie wodurch dieses gekühlt wird. Es stellt sich eine Mischtemperatur ein, die beispielsweise um 10-20K niedriger ist als die Temperatur des Abdampfes ohne Kühlung.

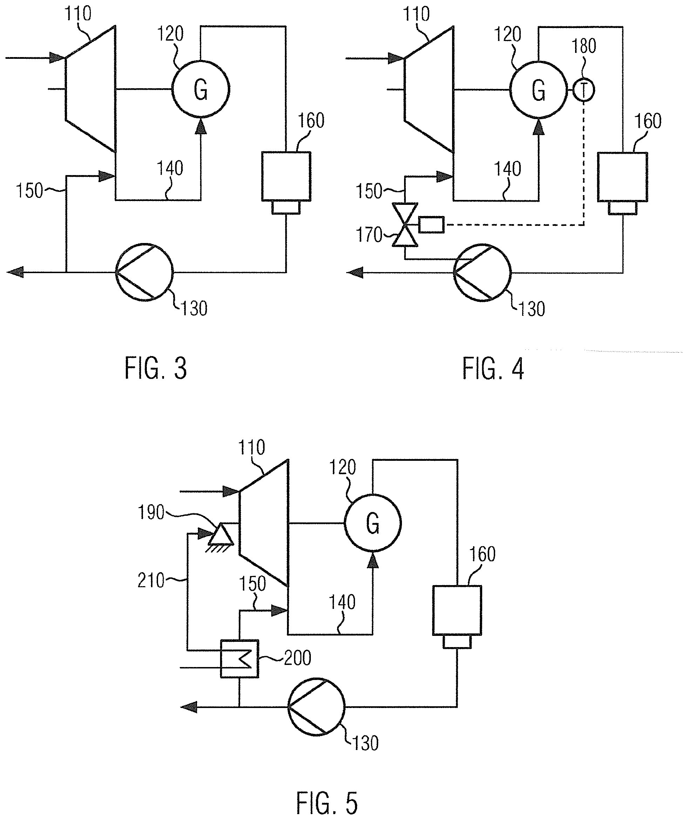

Figur 3 zeigt eine erste Ausführungsform der erfindungsgemäßen ORC-Vorrichtung. Die ORC-Vorrichtung umfasst eine erfindungsgemäße Vorrichtung (beispielsweise gemäß Figur 2) oder eine deren Weiterbildungen; einer Speisepumpe 130 zum Pumpen von flüssigem Arbeitsmedium zu einem Verdampfer (nicht dargestellt); wobei der Verdampfer zum Verdampfen des flüssigen Arbeitsmediums von der Speisepumpe dient; und einem Kondensator 160 zum Kondensieren des aus der baulichen Einheit von Expansionsmaschine 110 und Generator 120 austretenden dampfförmigen Arbeitsmediums. Das Mittel 150 zum Zuführen von flüssigem Arbeitsmedium in den Abdampfraum 140 umfasst hier auch eine Zuführleitung die in Strömungsrichtung gesehen flüssiges Arbeitsmedium nach der Pumpe (Hochdruckseite) abzweigt und in den Abdampfraum 140 leitet. Der Abdampfraum 140 ist hier und in den folgenden Figuren lediglich schematisch dargestellt und entspricht dem physikalischen Raum 140 nach Figur 2.

Figur 4 zeigt eine zweite Ausführungsform der erfindungsgemäßen ORC-Vorrichtung. Gegenüber der ersten in Figur 3 dargestellten Ausführungsform ist hier weiterhin ein Temperatursensor 180 (T) am Generator 120 vorgesehen, der die Wicklungstemperatur misst. Der Temperatursensor 180 kann beispielsweise ein PTC-Temperatursensor sein (PTC = Positive Temperature Coefficient, Kaltleiter). Zudem ist in der Leitung 150 ein schaltbares oder regelbares Ventil 170 angeordnet, das basierend auf der mit dem Temperatursensor 180 gemessenen Temperatur des Generators den Massenstrom des zur Kühlung in den Abdampfraum 140 eingebrachten flüssigen Arbeitsmediums regelt. Beispielsweise kann das Ventil 170 geöffnet (oder weiter geöffnet) werden, wenn ein vorgegebener Temperaturgrenzwert erreicht oder überschritten wird, während es ansonsten nicht (oder nur gering) geöffnet ist. Zudem erfolgt in dieser Ausführungsform beispielhaft eine Anzapfung einer mehrstufigen Speisepumpe 130 zwischen zwei benachbarten Stufen der Speisepumpe 130.

Figur 5 zeigt eine dritte Ausführungsform der erfindungsgemäßen ORC-Vorrichtung. Gegenüber der ersten in Figur 3 dargestellten Ausführungsform ist hier weiterhin eine Kühlvorrichtung 200 zum Kühlen von Schmiermittel, das in einer Schmiermittelleitung 210 zur Schmierung dem Lager 190 der Expansionsmaschine 110 zugeführt wird, vorgesehen. Die Kühlvorrichtung 210 hat hier die Gestalt eines Wärmeübertragers, worin Wärme aus dem Schmiermittel auf flüssiges Arbeitsmedium, das zur Kühlung dem Abdampfraum 140 zugeführt wird, übertragen wird.

Der Nutzen der Kühlung kann also erweitert werden, indem das Schmiermedium für die Lager der Expansionsmaschine vor Eintritt in das Lager durch das zur Kühlung verwendete flüssige Arbeitsmedium z. B. in einem Gegenstrom-Plattenwärmeübertrager gekühlt wird, falls das Schmiermittel eine höhere Temperatur als das flüssige Arbeitsmedium besitzt. Wenn weiterhin das Schmiermedium über den Abdampfraum in den Abdampf abgegeben wird, hat die Schmiermittelkühlung auch keinen negativen Einfluss auf die Abdampfkühlung, welcher aufgrund der Erwärmung des zur Kühlung verwendeten flüssigen Arbeitsmediums zunächst zu befürchten wäre. Bei aktuellen Expansionsmaschinen ist durch eine Bohrung zwischen Lagergehäuse und Abdampfraum gewährleistet, dass das Schmiermittel über den Abdampfraum aus dem Lager abgezogen wird. Im Lagergehäuse herrscht ein der Hochdruckseite der Expansionsmaschine ähnlicher Druck. Über die Druckdifferenz zwischen Lagerraum und Niederdruckseite wird das Schmiermedium in den Kältemitteldampf abgesaugt und kann somit den strömenden Arbeitsmediumsdampf mit abkühlen. Die an das flüssige Arbeitsmedium übertragene Wärme wurde dem Schmiermedium entzogen, so dass sich an der Temperatur des Dampfs nach der Mischung von Abdampf, Schmiermedium und flüssigem Arbeitsmedium nichts ändert.

Die dargestellten Ausführungsformen sind lediglich beispielhaft und der vollständige Umfang der vorliegenden Erfindung wird durch die Ansprüche definiert.

## Patentansprüche

1. Vorrichtung, umfassend:
eine Expansionsmaschine (110) zum Erzeugen von mechanischer Energie durch Expandieren von Dampf eines Arbeitsmediums;
einen mit einer Welle der Expansionsmaschine (110) verbundenen Generator (120) zum Erzeugen von elektrischer Energie aus mechanischer Energie der Expansionsmaschine (110),
wobei die Expansionsmaschine (110) eine halbhermetische oder hermetische Expansionsmaschine (110) ist, bei welcher der Generator (120) in ein Gehäuse der Expansionsmaschine (110) integriert ist,
**dadurch gekennzeichnet , dass** die Expansionsmaschine (110) und der Generator (120) eine bauliche Einheit mit einem Abdampfraum (140) zwischen der Expansionsmaschine (110) und dem Generator (120) bilden, dass im Betrieb der Expansionsmaschine (110) von der Expansionsmaschine (110) in den Abdampfraum (140) expandiertes Arbeitsmedium den Generator (120) überströmt und dadurch kühlt und dass Mittel (150) zum Zuführen, insbesondere zum Einspritzen, von flüssigem Arbeitsmedium in den Abdampf im Abdampfraum (140) vorgesehen sind, wodurch das in den Abdampfraum (140) expandierte Arbeitsmedium bevor dieses auf den Generator (120) trifft gekühlt wird.

2. Vorrichtung nach Anspruch 1, wobei das Mittel (150) zum Zuführen von Arbeitsmedium in den Abdampfraum (140) eine oder mehrere Bohrungen in einem Gehäuse der baulichen Einheit umfasst.

3. Vorrichtung nach Anspruch 1 oder 2, wobei die Welle als Hohlwelle ausgebildet ist und das Mittel (150) zum Zuführen von Arbeitsmedium in den Abdampfraum (140) eine oder mehrere Bohrungen in der Hohlwelle umfasst.

4. Vorrichtung nach einem der Ansprüche 1 bis 3, wobei das Mittel (150) zum Zuführen von Arbeitsmedium in den Abdampfraum (140) eine oder mehrere Düsen umfasst, die in Verbindung mit Anspruch 2 oder 3 insbesondere an einer oder mehreren der Bohrungen angeordnet sind, wobei die Düse oder die Düsen insbesondere regelbar ausgebildet sind.

5. Vorrichtung nach einem der Ansprüche 1 bis 4, weiterhin eine Turbulenzeinrichtung zum Erzeugen einer turbulenten Strömung im Abdampfraum (140) umfassend.

6. Vorrichtung nach einem der Ansprüche 1 bis 5, wobei das Mittel (150) zum Zuführen von Arbeitsmedium in den Abdampfraum (140) eine Zuführleitung für flüssiges Arbeitsmedium in den Abdampfraum (140) umfasst.

7. Vorrichtung nach Anspruch 6, wobei das Mittel (150) zum Zuführen von Arbeitsmedium in den Abdampfraum (140) weiterhin eine Blende oder ein Ventil, insbesondere ein gesteuertes oder geregeltes Ventil (170), zum Einstellen eines Massenstroms des zugeführten Arbeitsmediums in der Zuführleitung aufweist.

8. Vorrichtung nach Anspruch 7, weiterhin umfassend:
einen Temperatursensor (180) zum Messen der Dampftemperatur im Abdampfraum (140), wobei der Temperatursensor (180) insbesondere ein PTC-Temperatursensor ist; und/oder
einen Temperatursensor im Generator zum Messen der Wicklungstemperatur, wobei der Temperatursensor (180) insbesondere ein PTC-Temperatursensor ist; und
eine Steuer- oder Regeleinrichtung zum Steuern oder Regeln des Ventils oder der Blende in Abhängigkeit von der gemessenen Temperatur, insbesondere zum Ein- und Ausschalten des Massenstroms in der Zuführleitung.

9. Verfahren zum Betreiben einer Expansionsmaschine (110), umfassend die Schritte:
Erzeugen von mechanischer Energie durch Expandieren von Dampf eines Arbeitsmediums in der Expansionsmaschine (110); wobei die Expansionsmaschine (110) eine halbhermetische oder hermetische Expansionsmaschine (110) ist, bei welcher der Generator (120) in ein Gehäuse der Expansionsmaschine (120) integriert ist,
Erzeugen von elektrischer Energie aus mechanischer Energie der Expansionsmaschine (110) mit einem mit einer Welle der Expansionsmaschine verbundenen Generator (120);
**dadurch gekennzeichnet, dass** die Expansionsmaschine (110) und der Generator (120) eine bauliche Einheit mit einem Abdampfraum (140) zwischen der Expansionsmaschine (110) und dem Generator (120) bilden, und wobei im Betrieb der Expansionsmaschine (110) in den Abdampfraum (140) expandiertes Arbeitsmedium den Generator (120) überströmt und dadurch kühlt und
Zuführen, insbesondere Einspritzen, von flüssigem Arbeitsmedium in den Abdampfraum (140) zum Kühlen des expandierten Dampfes bevor dieser auf den Generator (120) trifft.

10. Verfahren nach Anspruch 9, umfassend den weiteren Schritt:
Einstellen eines Massenstroms des zugeführten Arbeitsmediums in einer Zuführleitung für flüssiges Arbeitsmedium in den Abdampfraum (140).

11. Verfahren nach Anspruch 10, umfassend die weiteren Schritte:
Messen der Dampftemperatur im Abdampfraum (140); oder
Messen einer Wicklungstemperatur des Generators (120); und
Einstellen des Massenstroms des zugeführten Arbeitsmediums mittels Steuern oder Regeln einer Querschnittsverengung (170) in der Zuführleitung, insbesondere eines Ventils oder einer Blende in der Zuführleitung, in Abhängigkeit von der gemessenen Temperatur,
insbesondere Ein- und Ausschalten des Massenstroms in der Zuführleitung.

12. Verfahren nach einem der Ansprüche 9 bis 11, umfassend die weiteren Schritte:
Zuführen eines Schmiermediums, insbesondere von flüssigem Arbeitsmedium als Schmiermedium, an eine oder mehrere Schmierstellen der Expansionsmaschine (110); und
Kühlen des Schmiermediums mit dem zum Abdampfraum (140) geführten Arbeitsmedium.

## Claims

1. A device comprising:
an expansion machine (110) for producing mechanical energy by expanding vapour of a working medium;
a generator (120) connected to a shaft of the expansion machine (110) for producing electrical energy from mechanical energy of the expansion machine (110),
wherein the expansion machine (110) is a semi-hermetic or hermetic expansion machine (110), in which the generator (120) is integrated in a housing of the expansion machine (110),
**characterised in that** the expansion machine (110) and the generator (120) form a constructional unit with a vapour chamber (140) between the expansion machine (110) and the generator (120), **in that** in operation of the expansion machine (110) working medium expanded by the expansion machine (110) into the vapour chamber (140) flows over and thus cools the generator (120) and **in that** there are provided means (150) for feeding, in particular for injecting, liquid working medium into the vapour in the vapour chamber (140), whereby the working medium expanded in the vapour chamber (140) is cooled before it arrives at the generator (120).

2. A device according to claim 1, wherein the means (150) for feeding working medium into the vapour chamber (140) comprises one or more bores in the housing of the constructional unit.

3. A device according to claim 1 or 2, wherein the shaft is constructed as a hollow shaft and the means (150) for feeding working medium into the vapour chamber (140) comprises one or more bores in the hollow shaft.

4. A device according to any of claims 1 to 3, wherein the means (150) for feeding working medium into the vapour chamber (140) comprises one or more nozzles, which are arranged in connection with claim 2 or 3 in particular at one or more of the bores, wherein the nozzle or the nozzles in particular are configured to be controllable.

5. A device according to any of claims 1 to 4, further comprising a turbulence device for producing a turbulent flow in the vapour chamber (140).

6. A device according to any of claims 1 to 5, wherein the means (150) for feeding the working medium into the vapour chamber (140) comprises a feed line for liquid working medium into the vapour chamber (140).

7. A device according to claim 6, wherein the means (150) for feeding working medium into the vapour chamber (140) further comprises a shutter or a valve, in particular an open- or closed-loop control valve (170), for adjusting a mass flow of the working medium fed in the feed line.

8. A device according to claim 7, further comprising:
a temperature sensor (180) for measuring the vapour temperature in the vapour chamber (140) wherein the temperature sensor (180) in particular is a PTC temperature sensor; and/or
a temperature sensor in the generator for measuring the winding temperature, wherein the temperature sensor (180) in particular is a PTC temperature sensor; and
an open- or closed-loop control device for the open- or closed-loop control of the valve or the shutter in dependence upon the measured temperature, in particular for the turning on and turning off of the mass flow in the feed line.

9. A method for the operation of an expansion machine (110), comprising the steps:
producing mechanical energy by expanding vapour of a working medium in the expansion machine (110); wherein the expansion machine (110) is a semi-hermetic or hermetic expansion machine (110) in which the generator (120) is integrated in a housing of the expansion machine (120),
producing electrical energy from mechanical energy of the expansion machine (110) by a generator (120) connected to a shaft of the expansion machine;
**characterised in that** the expansion machine (110) and the generator (120) form a constructional unit with a vapour chamber (140) between the expansion machine (110) and the generator (120), and wherein in operation of the expansion machine (110) working medium expanded into the vapour chamber (140) flows over and thus cools the generator (120) and
feeding, in particular injecting, liquid working medium into the vapour chamber (140) for cooling the expanded vapour before this arrives at the generator (120).

10. A method according to claim 9, comprising the further step:
adjusting a mass flow of the fed working medium in a feed line for liquid medium into the vapour chamber (140).

11. A method according to claim 10, comprising the further steps:
measuring the vapour temperature in the vapour chamber (140); or
measuring a winding temperature of the generator (120); and
adjusting the mass flow of the fed working medium by means of the open- or closed-loop control of a cross-sectional constriction (170) in the feed line, in particular of a valve or a shutter in the feed line, in dependence on the measured temperature, in particular turning on and turning off the mass flow in the feed line.

12. A method according to any of claims 9 to 11, comprising the further steps:
feeding a lubricant, in particular of liquid working medium as lubricant, to one or more lubrication points of the expansion machine (110); and
cooling the lubricant by the working medium fed to the vapour chamber (140).

## Revendications

1. Dispositif, comprenant :
une machine à expansion (110) pour générer de l'énergie mécanique par détente de la vapeur d'un fluide de travail ;
un générateur (120) relié à un arbre de la machine à expansion (110) pour générer de l'énergie électrique à partir de l'énergie mécanique de la machine à expansion (110) ,
dans lequel la machine à expansion (110) est une machine à expansion (110) semi-hermétique ou hermétique, pour laquelle le générateur (120) est intégré dans un carter de la machine à expansion (110),
**caractérisé en ce que** la machine à expansion (110) et le générateur (120) forment une unité structurale avec une chambre de vapeur d'échappement (140) entre la machine à expansion (110) et le générateur (120), que lors du fonctionnement de la machine à expansion (110) le fluide de travail détendu par la machine à expansion (110) dans la chambre de vapeur d'échappement (140) s'écoule au-dessus du générateur (120) et le refroidit ainsi et que des moyens (150) pour amener, en particulier pour injecter, le fluide de travail liquide dans la vapeur d'échappement dans la chambre de vapeur d'échappement (140) sont prévus, ce qui a pour effet que le fluide de travail détendu dans la chambre de vapeur d'échappement (140) est refroidi avant que celui-ci ne rencontre le générateur (120).

2. Dispositif selon la revendication 1, dans lequel le moyen (150) pour amener le fluide de travail dans la chambre de vapeur d'échappement (140) comprend un ou plusieurs trous dans un carter de l'unité structurale.

3. Dispositif selon la revendication 1 ou 2, dans lequel l'arbre est réalisé sous la forme d'un arbre creux et le moyen (150) pour amener le fluide de travail dans la chambre de vapeur d'échappement (140) comprend un ou plusieurs trous dans l'arbre creux.

4. Dispositif selon l'une quelconque des revendications 1 à 3, dans lequel le moyen (150) pour amener le fluide de travail dans la chambre de vapeur d'échappement (140) comprend une ou plusieurs buses, qui en liaison avec la revendication 2 ou 3 sont disposées en particulier sur un ou plusieurs des trous, dans lequel la buse ou les buses sont réalisées en particulier de manière régulable.

5. Dispositif selon l'une quelconque des revendications 1 à 4, comprenant en outre un système de turbulence pour générer un écoulement turbulent dans la chambre de vapeur d'échappement (140).

6. Dispositif selon l'une quelconque des revendications 1 à 5, dans lequel le moyen (150) pour amener le fluide de travail dans la chambre de vapeur d'échappement (140) comprend une conduite d'amenée pour le fluide de travail liquide dans la chambre de vapeur d'échappement (140).

7. Dispositif selon la revendication 6, dans lequel le moyen (150) pour amener le fluide de travail dans la chambre de vapeur d'échappement (140) présente en outre un obturateur ou une soupape, en particulier une soupape (170) commandée ou régulée, pour régler un débit massique du fluide de travail amené dans la conduite d'amenée.

8. Dispositif selon la revendication 7, comprenant en outre :
un capteur de température (180) pour mesurer la température de la vapeur dans la chambre de vapeur d'échappement (140), dans lequel le capteur de température (180) est en particulier un capteur de température PTC ; et/ou
un capteur de température dans le générateur pour mesurer la température d'enroulement, dans lequel le capteur de température (180) est en particulier un capteur de température PTC ; et
un système de commande ou de régulation pour commander ou réguler la soupape ou l'obturateur en fonction de la température mesurée, en particulier pour mettre en circuit et hors circuit le débit massique dans la conduite d'amenée.

9. Procédé pour faire fonctionner une machine à expansion (110), comprenant les étapes :
de génération d'énergie mécanique par détente de la vapeur d'un fluide de travail dans la machine à expansion (110) ; dans lequel la machine à expansion (110) est une machine à expansion (110) semi-hermétique ou hermétique, pour laquelle le générateur (120) est intégré dans un carter de la machine à expansion (120),
de génération d'énergie électrique à partir de l'énergie mécanique de la machine à expansion (110) avec un générateur (120) relié à un arbre de la machine à expansion ;
**caractérisé en ce que** la machine à expansion (110) et le générateur (120) forment une unité structurale avec une chambre de vapeur d'échappement (140) entre la machine à expansion (110) et le générateur (120), et dans lequel lors du fonctionnement de la machine à expansion (110) le fluide de travail détendu dans la chambre de vapeur d'échappement (140) s'écoule au-dessus du générateur (120) et le refroidit ainsi et
d'amenée, en particulier d'injection, du fluide de travail liquide dans la chambre de vapeur d'échappement (140) pour refroidir le fluide de travail détendu avant que celui-ci ne rencontre le générateur (120).

10. Procédé selon la revendication 9, comprenant l'autre étape :
de réglage d'un débit massique du fluide de travail amené dans une conduite d'amenée pour le fluide de travail liquide dans la chambre de vapeur d'échappement (140) .

11. Procédé selon la revendication 10, comprenant les autres étapes :
de mesure de la température de la vapeur dans la chambre de vapeur d'échappement (140) ; ou
de mesure d'une température d'enroulement du générateur (120) ; et
de réglage du débit massique du fluide de travail amené au moyen d'une commande ou régulation d'un rétrécissement de section (170) dans la conduite d'amenée, en particulier d'une soupape ou d'un obturateur dans la conduite d'amenée, en fonction de la température mesurée, en particulier mise en circuit et hors circuit du débit massique dans la conduite d'amenée.

12. Procédé selon l'une quelconque des revendications 9 à 11, comprenant les autres étapes :
d'amenée d'un lubrifiant, en particulier d'un fluide de travail liquide comme lubrifiant, sur un ou plusieurs points de lubrification de la machine à expansion (110) ; et
de refroidissement du lubrifiant avec le fluide de travail guidé vers la chambre de vapeur d'échappement (140) .
